# EUROPEAN PATENT APPLICATION

(11) **EP 3 808 887 A1**
(43) Date of publication of application: **21.04.2021**
(21) Application number: 20202043.4
(22) Date of filing: 15.10.2020
(51) Int. Cl.: D06F 37/26, F16C 35/077, B29C 45/14, B29C 45/26, B29L 31/00

(54) **PROCESS FOR MAKING A TUB ASSEMBLY**

(30) Priority: 15.10.2019 IT 201900018779
(71) Applicant: S.P.M. Engineering S.r.l., 33080 Fiume Veneto (Pn) (IT)
(72) Inventor: SARTOR, Ennio, 33080 Fiume Veneto (Pn) (IT)
(74) Representative: PGA S.p.A.

(57) **Abstract**

The present invention relates to a process for making a tub assembly (1) for a household appliance (100) such as a washing machine or a washer-dryer. The process provides for arranging a mold (2) provided with a molding chamber shaped as a tub element (3) and at least one rotation support member (8, 9) configured for supporting in rotation a drive shaft (13) of a basket (14) of a household appliance (100). The process also provides for positioning the rotation support member (8, 9) in a predefined position with respect to the mold (2) and co-molding the rotation support member (8, 9) with plastic material at the molding chamber to form a tub assembly (1). The rotation support member (8, 9) co-molded with plastic material is embedded in the plastic material forming the tub element (3).

## Description

### FIELD OF THE FINDING

The object of the present invention is a process for making a tub assembly for a household appliance.
The invention also regards a tub assembly for a household appliance.
The invention also relates to a household appliance.
The invention has advantageous application in the field of household appliances provided with tub, such as washing machines or washer-dryer.

### STATE OF THE ART

Household appliances are known that are provided with a basket, which is typically supported in rotation by bearings. In particular, washing machines are known that are provided with a bearing holder made of aluminum carrying bearings intended to allow the rotation of the basket. The bearing holder made of aluminum has seats that are suitably processed in order to house the bearings; the attainment of such seats is carried out by means of a machining. In process terms, such machining has numerous drawbacks since it is costly and can determine errors in the dimensions or in the tolerances of the seats of the bearing holder, main cause of resonance and hence of noise. Such errors render the bearing holder unsuitable for housing the bearings, they consequently cause the discarding of the bearing holder attained and cause the relative costs due to the discarding of the piece and to the need to produce a further bearing holder. With regard to the process for making known washing machines of the above-described type, after having made the seats of the bearing holder the bearings are engaged with precision at the respective seats by means of a suitable machine. In substance, such machine forces the bearings into the respective seats of the bearing holder; if the aforesaid machining is not carried out with the necessary precision, for example through a misalignment of the components to be engaged (such as a misalignment of at least one bearing with respect to the respective seat), this can determine the discarding of the bearing holder and of the bearings. In addition, such machining causes noise and involves an overheating of the components to be engaged; both of these phenomena are undesired.

### OBJECTS OF THE INVENTION

Object of the present invention is therefore to resolve at least one of the drawbacks and/or limitations of the preceding solutions.
A first object of the present invention is to provide a process for making a tub assembly that allows making a tub assembly that is compact and strong.
A further object of the present invention is to attain a tub assembly with limited production costs.
Another object of the present invention is to provide a reliable compact tub assembly with effective operation. Also constituting an additional object of the present invention is to disclose a household appliance, such as a washing machine or a washer-dryer, which has a reliable, compact tub assembly with effective operation.

These and still other objects, which will be more evident from the following description, are substantially attained by a process for making a tub assembly, by a tub assembly, by a process for assembling a household appliance and by a household appliance in accordance with one or more of the enclosed claims and/or with one or more of the following aspects.

### SUMMARY

Aspects of the finding are described hereinbelow.
In a 1st aspect, a process is provided for making a tub assembly for a household appliance such as a washing machine or a washer-dryer comprising at least the following steps:
   - arranging a mold provided with a molding chamber at least partially shaped as a tub element,
   - arranging at least one rotation support member, such as a rolling bearing, configured for supporting a shaft in rotation, for example a drive shaft of a basket of a household appliance such as a washing machine or a washer-dryer,
   - positioning the rotation support member in a predefined position with respect to the mold,
   - co-molding the rotation support member with plastic material at the molding chamber to form a tub assembly.
In a 2nd aspect in accordance with the 1st aspect, the step of co-molding the rotation support member with plastic material at the molding chamber comprises:
   - introducing plastic material within the molding chamber at least partially around the rotation support member to form a tub element made of plastic material, the tub element comprising a tub portion or a tub for a household appliance such as a washing machine or a washer-dryer and defining a housing volume sized for housing a basket of a household appliance such as a washing machine or a washer-dryer,
   - solidifying the plastic material to form a tub assembly in which the rotation support member is integrated in the tub element.
In a 3rd aspect in accordance with the 2nd aspect, introducing plastic material within the molding chamber at least partially around the rotation support member to form a tub element comprises injecting plastic material in the molding chamber.
In a 4th aspect in accordance with the 1st or with the 2nd or with the 3rd aspect, the step of co-molding the rotation support member with plastic material at the molding chamber comprises embedding the rotation support member in the plastic material forming the tub element.
In a 5th aspect in accordance with any one of the aspects from the 1st to 4th, positioning the rotation support member in a predefined position with respect to the mold comprises positioning the rotation support member at least partially at or within at least one molding cavity of the mold.
In a 6th aspect in accordance with any one of the aspects from the 1st to 5th, positioning the rotation support member in a predefined position with respect to the mold comprises mutually arranging the rotation support member and the mold such that the rotation support member is positioned at least partially within the molding chamber.
In a 7th aspect in accordance with any one of the aspects from the 1st to 6th, the process also comprises the step of arranging a positioning element.
In an 8th aspect in accordance with any one of the aspects from the 1st to 7th, positioning the rotation support member in a predefined position with respect to the mold comprises engaging the rotation support member with the positioning element, and in which the step of co-molding the rotation support member with plastic material at the molding chamber is subsequent to the step of engaging the rotation support member with the positioning element.
In a 9th aspect in accordance with the 7th or with the 8th aspect:
   - the process comprises the step of engaging the positioning element at a housing of the mold before the step of introducing plastic material in the molding chamber, or
   - the step of arranging a positioning element comprises arranging a positioning element engaged at a housing of the mold or in a single piece with the mold.
In a 10th aspect in accordance with the 7th or with the 8th or with the 9th aspect, the positioning element has at least one shoulder, in which engaging the rotation support member with the positioning element comprises fitting the rotation support member with the positioning element in a manner such that an abutment surface of the rotation support member contacts the shoulder.
In a 11th aspect in accordance with any one of the aspects from the 1st to 10th, arranging at least one rotation support member comprises arranging a first rotation support member and a second rotation support member both configured for supporting a shaft in rotation, e.g. a drive shaft of a basket of a household appliance such as a washing machine or a washer-dryer, the process also comprising the following steps:
   - arranging a spacer, optionally made of plastic material, configured for spacing the first rotation support member and the second rotation support member,
   - before the step of co-molding the rotation support member with plastic material at the molding chamber, inserting the spacer between the first rotation support member and the second rotation support member.
In a 12th aspect in accordance with the 11th aspect, the step of co-molding the rotation support member with plastic material at the molding chamber comprises co-molding the first rotation support member, the second rotation support member and the spacer with plastic material at the molding chamber, optionally in which co-molding the first rotation support member, the second rotation support member and the spacer with plastic material at the molding chamber comprises embedding the first rotation support member, the second rotation support member and the spacer in the plastic material forming the tub element.
In a 13th aspect in accordance with the 11th or with the 12th aspect, the step of introducing plastic material in the molding chamber comprises introducing plastic material at least partially around at least two between: the first rotation support member, the second rotation support member and the spacer.
In a 14th aspect in accordance with the 11th or with the 12th or the 13th aspect, the step of positioning the rotation support member in a predefined position with respect to the mold comprises engaging the first rotation support member, the second rotation support member and the spacer with the positioning element.
In a 15th aspect in accordance with any one of the aspects from the 11th to the 14th, the positioning element has an elongated shape with axial extension and comprises a first shoulder and a second shoulder axially spaced from each other, and in which:
   - arranging at least one rotation support member comprises arranging a first rotation support member and a second rotation support member both configured for supporting a shaft in rotation, e.g. a drive shaft of a basket of a household appliance such as a washing machine or a washer-dryer,
   - engaging the rotation support member with the positioning element comprises engaging the first rotation support member, the second rotation support member and the spacer with the positioning element, engaging the first rotation support member, the second rotation support member and the spacer with the positioning element comprising:
      ∘ fitting the first rotation support member with the positioning element, the step of fitting the first rotation support member with the positioning element comprising placing an abutment surface of the first rotation support member in abutment with the first shoulder,
      ∘ fitting the spacer with the positioning element, the step of fitting the spacer with the positioning element comprising housing the first rotation support member at least partially at a first seat of the spacer,
      ∘ fitting the second rotation support member with the positioning element, the step of fitting the second rotation support member with the positioning element comprising placing an abutment surface of the second rotation support member in abutment with the second shoulder and/or housing the second rotation support member at least partially at a second seat of the spacer.
In a 16th aspect in accordance with the 15th aspect, the step of fitting the spacer with the positioning element is subsequent to the step of fitting the first rotation support member with the positioning element.
In a 17th aspect in accordance with the 15th or with the 16th aspect, the step of fitting the second rotation support member with the positioning element is subsequent to the step of fitting the spacer with the positioning element.
In a 18th aspect in accordance with any one of the aspects from the 11th to the 17th:
   - arranging a spacer comprises arranging a spacer provided with a tubular shell with axially symmetric extension, e.g. substantially cylindrical or conical, delimiting an internal area of the spacer, the spacer comprising a drive element emerging transversely from the tubular shell at said internal area, the drive element being configured for centering and/or driving the spacer with respect to the positioning element,
   - the step of fitting the spacer with the positioning element comprising:
      ∘ centering the spacer with respect to the positioning element by means of the drive element, and/or
      ∘ determining a relative sliding between the drive element and the positioning element.
In a 19th aspect in accordance with any one of the aspects from the 1st to the 18th, the process comprises the steps of:
   - arranging at least one positioning ring,
   - before the step of introducing plastic material within the molding chamber, positioning the positioning ring around the rotation support member.
In a 20th aspect in accordance with any one of the aspects from the 2nd to the 19th, solidifying the plastic material to form a tub assembly comprises constraining the rotation support member by means of the positioning ring.
In a 21st aspect in accordance with any one of the aspects from the 1st to the 20th:
   - arranging at least one positioning ring comprises arranging a first positioning ring and a second positioning ring,
   - positioning the positioning ring around the rotation support member comprises:
      ∘ positioning the first positioning ring around the first rotation support member, and
      ∘ positioning the second positioning ring around the second rotation support member.
In a 22nd aspect in accordance with any one of the aspects from the 2nd to the 21st, solidifying the plastic material to form a tub assembly comprises:
   - constraining the first rotation support member by means of the first positioning ring,
   - constraining the second rotation support member by means of the second positioning ring.
In a 23rd aspect in accordance with the 22nd aspect, the process comprises the step of arranging an abutment element configured for providing a positioning abutment for the positioning element.
In a 24th aspect in accordance with the 23rd aspect, the process comprises the step of engaging the abutment element with the positioning element, the step of engaging the abutment element with the positioning element being subsequent to the step of positioning the rotation support member in a predefined position with respect to the mold.
In a 25th aspect in accordance with the 23rd or with the 24th aspect, the abutment element is engaged with the second molding element or it is in a single piece with the second molding element.
In a 26th aspect in accordance with the 23rd or with the 24th or with the 25th aspect, the abutment element has a cavity at least partially counter-shaped with respect to one end of the positioning element, the step of engaging the abutment element with the positioning element comprises engaging said cavity of the abutment element with said end of the positioning element.
In a 27th aspect in accordance with any one of the aspects from the 1st to 26th, arranging a mold provided with a molding chamber at least partially shaped as a tub element comprises arranging at least one first molding element and a second molding element having respective molding cavities, said molding cavities being configured for forming, in cooperation, at least part of the molding chamber,
   and in which, before the step of co-molding the rotation support member with plastic material at the molding chamber, the process provides for a step of approaching the first molding element and the second molding element, the step of approaching the first molding element and the second molding element comprising a step of forming at least part of the molding chamber.
In a 28th aspect in accordance with the 27th aspect, the first molding element also has a housing counter-shaped with respect to one end of the positioning element, the step of engaging the positioning element at a housing of the mold comprising engaging said end of the positioning element at said housing of the first molding element.
In a 29th aspect in accordance with any one of the aspects from the 1st to the 28th, arranging a mold provided with a molding chamber at least partially shaped as a tub element comprises:
   - arranging at least one first molding element, a second molding element and a third molding element having respective molding cavities, said molding cavities being configured for forming, in cooperation, the molding chamber, the third molding element having a recess,
   - arranging the third molding element between the first molding element and the second molding element.
In a 30th aspect in accordance with any one of the aspects from the 1st to the 29th, co-molding the rotation support member with plastic material at the molding chamber comprises:
   - forming a collar of the tub assembly at said recess, the collar being configured for allowing the through housing of a shaft at its interior, for example of a drive shaft of a basket of a household appliance such as a washing machine or a washer-dryer,
   - embedding the rotation support member in the plastic material forming the collar.
In a 31st aspect in accordance with the 30th aspect, embedding the rotation support member in the plastic material forming the collar comprises embedding the first rotation support member, the second rotation support member and the spacer in the plastic material forming the collar.
In a 32nd aspect in accordance with any one of the aspects from the 1st to the 31st, the molding chamber of the mold is a co-molding chamber.
In a 33rd aspect, a tub assembly is provided for a household appliance such as a washing machine or a washer-dryer, the tub assembly comprising:
   - a tub element made of plastic material defining a housing volume sized for housing a basket of a household appliance such as a washing machine or a washer-dryer,
   - at least one rotation support member co-molded in the plastic material forming the tub element.
In a 34th aspect in accordance with the 33rd aspect, the tub assembly is attained by means of the process in accordance with any one of the preceding aspects and/or of the enclosed process claims.
In a 35th aspect in accordance with the 33rd or with the 34th aspect, the rotation support member is embedded in the plastic material forming the tub element.
In a 36th aspect in accordance with the 33rd or with the 34th or with the 35th aspect, the rotation support member is configured for supporting a shaft in rotation, e.g. a drive shaft of a basket of a household appliance such as a washing machine or a washer-dryer.
In a 37th aspect in accordance with any one of the aspects from the 33rd to the 36th, the tub assembly comprises a first rotation support member and a second rotation support member both configured for supporting a shaft in rotation, e.g. a drive shaft of a basket of a household appliance such as a washing machine or a washer-dryer.
In a 38th aspect in accordance with any one of the aspects from the 33rd to the 37th, the tub assembly comprises a collar configured for allowing the through housing of a shaft at its interior, for example of a drive shaft of a basket of a household appliance such as a washing machine or a washer-dryer.
In a 39th aspect in accordance with the 38th aspect, the first rotation support member and the second rotation support member are housed within the collar.
In a 40th aspect in accordance with the 38th or with the 39th aspect, the collar has an axial extension, the first rotation support member and the second rotation support member being axially spaced from each other.
In a 41st aspect in accordance with any one of the aspects from the 33rd to the 40th, the tub assembly comprises a spacer housed within the collar in interposition between the first rotation support member and the second rotation support member, the spacer optionally being made of plastic material.
In a 42nd aspect in accordance with the 41st aspect, the spacer has an axial extension and comprises a first seat configured for at least partially housing the first rotation support member and a second seat configured for at least partially housing the second rotation support member, the first seat and the second seat being axially spaced from each other.
In a 43rd aspect in accordance with the 41st or with the 42nd aspect, the spacer has an axial extension smaller than an axial extension of the collar.
In a 44th aspect in accordance with the 41st or with the 42nd or with the 43rd aspect, the spacer is embedded in the collar.
In a 45th aspect, a process is provided for assembling a household appliance such as a washing machine or a washer-dryer, comprising the following steps:
   - arranging a tub assembly in accordance with any one of the aspects from the 33rd to the 41st and/or of the enclosed tub assembly claims and/or attained by means of the process in accordance with any one of the aspects from the 1st to the 32nd and/or of the enclosed process claims, the tub element defining a housing volume,
   - arranging a basket configured for receiving articles to be treated,
   - rotatably engaging the basket with the tub assembly, the step of rotatably engaging the basket with the tub assembly comprising arranging the basket at said housing volume.
In a 46th aspect in accordance with the 45th aspect, rotatably engaging the basket with the tub assembly comprises engaging a shaft configured for driving in rotation the basket with the rotation support member.
In a 47th aspect in accordance with the 46th aspect, engaging a shaft configured for driving in rotation the basket with the rotation support member comprises engaging said shaft with the first rotation support member and with the second rotation support member.
In a 48th aspect in accordance with the 46th or with the 47th aspect, the shaft is operatively connected to the basket.
In a 49th aspect in accordance with any one of the aspects from the 45th to the 48th, the process also comprises the steps of:
   - arranging a box-like body,
   - arranging the tub assembly within the box-like body.
In a 50th aspect in accordance with any one of the aspects from the 45th to the 49th, the process also comprises the steps of:
   - arranging a motor member configured for driving the basket in rotation,
   - operatively connecting the motor member to the basket, for example by means of a member for transmitting rotary motion such as a belt.
In a 51st aspect, a household appliance is provided, such as a washing machine or a washer-dryer, comprising:
   - a box-like body,
   - a tub assembly in accordance with any one of the aspects from the 33rd to the 41st and/or of the enclosed tub assembly claims and/or made by means of the process in accordance with any one of the aspects from the 1st to the 32nd and/or of the enclosed process claims, the tub assembly being arranged in the box-like body, the tub element defining a housing volume,
   - a basket arranged at said housing volume and configured for receiving articles to be treated,
   - a shaft configured for driving in rotation the basket, and rotatably engaged with the tub assembly by means of the rotation support member of the tub assembly.
In a 52nd aspect in accordance with the 51st aspect, the household appliance comprises a motor member configured for driving in rotation the basket.
In a 53rd aspect in accordance with the 52nd aspect, the household appliance comprises a member for transmitting rotary motion operatively connecting the motor member with the shaft, such as a belt.
In a 54th aspect in accordance with the 51st or with the 52nd or with the 53rd aspect, the tub assembly comprises a first rotation support member and a second rotation support member, the shaft being rotatably engaged with the tub assembly by means of the first rotation support member and the second rotation support member.

### BRIEF DESCRIPTION OF THE DRAWINGS

Several embodiments and several aspects of the finding will be described hereinbelow with reference to the enclosed drawings, provided only as a non-limiting example in which:
- figure 1 is a view of a mold by means of which it is possible to implement the process for making a tub assembly in accordance with one embodiment of the present invention,
- figure 2 is a sectioned side view of a tub assembly in accordance with one embodiment of the present invention,
- figure 3 is a sectioned side view of a household appliance in accordance with one embodiment of the present invention, where several components have been removed.

### DEFINITIONS AND CONVENTIONS

It is observed that in the present detailed description, corresponding parts illustrated in the various figures are indicated with the same numeric reference numbers. The figures could illustrate the object of the invention by means of representations that are not in scale; therefore, parts and components illustrated in the figures relative to the object of the invention could exclusively regard schematic representations. In the context of the present description, the use of terms such as "above", "upper", "at the top", "below", "lower", "at the bottom", "alongside", "lateral", "laterally", "horizontal", "horizontally", "vertical", "vertically", "frontal", "frontally", "rear", "at the rear" and the like refer - except for specific different indications - to at least one spatial orientation that the object of the invention can normally take on in operating conditions or use conditions. On such matter, see the enclosed figures illustrating at least one possible spatial orientation of the object of the invention. Except for specific different indications, the use of terms "condition" or "configuration" can be used interchangeably in the context of the present document.

Hereinbelow, several definitions are reported which can be used for the purpose of understanding the present invention:
- with the expression "tub assembly" it is intended an assembly comprising a tub element and at least one rotation support member,
- with the expression "tub element" it is intended a tub portion or a tub for a household appliance such as a washing machine or a washer-dryer,
- with the term "tub" it is intended a housing body defining a washing chamber (tub for washing machines) or a washing and drying chamber (tub for washer-dryer) and configured for housing at its interior a rolling basket.

### DETAILED DESCRIPTION

### Process for making a tub assembly

Forming the object of the present invention is a process for making a tub assembly 1. The tub assembly 1 attained in accordance with such process can be used for any household appliance 100 of the type comprising a tub configured for housing a rolling basket at its interior. Possible examples of such household appliances 100 are represented by washing machines and by washer-dryers. As will be seen in more detail hereinbelow, the tub assembly 1 attained by means of the process pursuant to the invention comprises at least the tub portion (collar) rotatably housing, in a through manner, the rotating drive shaft of the basket.

The process provides for arranging a mold 2 provided with a molding chamber at least partially shaped as a tub element 3. By molding chamber at least partially shaped as a tub element 3 it is intended a molding chamber shaped like the tub portion or like the entire tub that one wishes to make. Within the molding chamber, there is the molding of the tub element 3 of the tub assembly 1; the resulting tub element 3 is substantially counter-shaped with respect to the molding chamber. The mold 2 comprises at least one first molding element 4 and a second molding element 5 having respective molding cavities configured for forming, in cooperation, at least part of the molding chamber or the entire molding chamber. The mold 2 can also comprise a third molding element 6 configured for being interposed between the first molding element 4 and the second molding element 5. The third molding element 6 has a respective molding cavity and is also configured for forming, in cooperation with the respective molding cavities of the first molding element 4 and of the second molding element 5, the entire molding chamber. Alternatively, the first molding element 4, the second molding element 5 and the third molding element 6 can be configured for defining at least part of the molding chamber and the mold 2 can comprise one or more further molding elements intended to form the remaining portions of the molding chamber. Hereinbelow, the preferred embodiment illustrated in the enclosed figures is described; this provides for a first molding element 4, a second molding element 5 and a third molding element 6. Nevertheless, for the sake of completeness, it is indicated that in an alternative embodiment only a first molding element 4 and a second molding element 5 may be provided, defining two half-molds having respective cavities complementary to each other and configured for defining, in cooperation, the molding chamber.

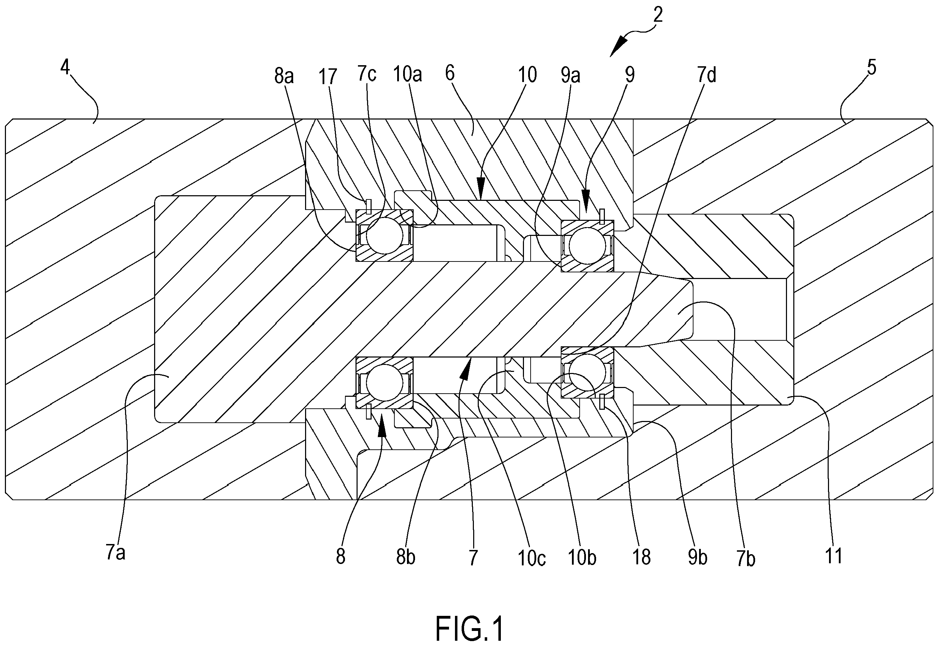

The process also provides for arranging a positioning element 7. As illustrated in figure 1, the positioning element 7 has an elongated shape with axial extension. The positioning element 7 has preferably an axially symmetric extension and is extended between a first end 7a and a second end 7b which are axially opposite. The axially symmetric extension of the positioning element 7 can for example be an extension at least partly substantially cylindrical or conical, or at least partly cylindrical and at least partly conical, or cylindrical in alternation. As illustrated in figure 1, the second end 7b of the positioning element 7 can have a substantially conical tapering. The positioning element 7 has a characteristic size, such as a diameter thereof or an equivalent diameter thereof (in the case of non-circular sections), which decreases between the first end 7a and the second end 7b; in such embodiment, the characteristic size of the first end 7a is greater than the characteristic size of the second end 7b. The positioning element 7 comprises a first shoulder 7c and a second shoulder 7d axially spaced from each other; each shoulder 7c, 7d substantially defines a portion at which the aforesaid characteristic size of the positioning element 7 decreases. As illustrated in figure 1, the first shoulder 7c can be defined in proximity to the first end 7a or be defined at a half-length of the positioning element 7 defined between the first end 7a and an axial center line of the positioning element 7 and, analogously, the second shoulder 7d can be defined in proximity to the second end 7b or be defined at a half-length of the positioning element 7 defined between the second end 7b and an axial center line of the positioning element 7. The characteristic size of the positioning element 7 at the first shoulder 7c is greater than the characteristic size of the positioning element at the second shoulder 7d. In order to house the first end 7a of the positioning element 7, the first molding element 4 can have a housing counter-shaped with respect to the first end 7a; in such embodiment, the process can provide for engaging the first end 7a of the positioning element at the housing or it can provide for arranging a first molding element 4 with which a positioning element 7 has been pre-engaged. As illustrated in figure 1, the positioning element 7 can then be engaged with the first molding element 4 at the aforesaid housing. Alternatively the positioning element 7 and the first molding element 4 can be made of a single piece. The process also provides for arranging at least one rotation support member 8, 9 configured for supporting a shaft in rotation, such as the rotary drive shaft of a basket of a household appliance of the above-described type. The rotation support member 8, 9 can for example be a rolling bearing. Preferably, in order to provide a more stable support for the rotation for the shaft of the basket of the household appliance in which the tub assembly 1 is intended to be used, the process provides for arranging a first rotation support member 8 and a second rotation support member 9. The first rotation support member 8 and the second rotation support member 9 can be of the same type. As illustrated in the preferred embodiment shown in the enclosed figures, the first rotation support member 8 and the second rotation support member 9 can both be rolling bearings, e.g. both ball bearings or both roller bearings. In one variant, the first rotation support member 8 can be a ball bearing and the second rotation support member 9 can be a roller bearing, or vice versa. In a further variant, at least one rotation support member 8, 9 is a sliding bearing. Each rotation support member 8, 9 has an axially symmetric annular extension, a through hole intended to house, in a rotatable and through manner, a rotary drive shaft of the basket of a household appliance and respective opposite abutment surfaces 8a, 8b, 9a, 9b. In particular, as illustrated in figure 1, the first rotation support member 8 comprises a first abutment surface 8a and a second abutment surface 8b opposite each other and the second rotation support member 9 comprises a first abutment surface 9a and a second abutment surface 9b opposite each other. As illustrated in the enclosed figures, the first rotation support member 8 can have an external diameter greater than an external diameter of the second rotation support member 9. In addition or as an alternative, the first rotation support member 8 can have an internal diameter greater than an internal diameter of the second rotation support member 9 (as illustrated in the enclosed figures) or it can have an internal diameter substantially equal to an internal diameter of the second rotation support member 9.

The process provides for positioning at least one rotation support member 8, 9 in a predefined position with respect to the mold 2, for example by mutually arranging at least one rotation support member 8, 9 and the mold 2 such that the rotation support member 8, 9 is positioned at least partially within the molding chamber. Hereinbelow, the embodiment of the process is described, which provides for positioning a first rotation support member 8 and a second rotation support member 9 in a predefined position with respect to the mold 2. In such embodiment, the process preferably provides for also arranging a spacer 10, e.g. made of plastic material. The spacer 10 is configured for spacing the first rotation support member 8 and the second rotation support member 9. The spacer 10 is provided with a tubular shell with axially symmetric extension, e.g. substantially cylindrical or conical, delimiting an internal area of the spacer 10. The tubular shell is extended for a specific axial extension between axially opposite ends of the spacer 10. The ends of the spacer 10 are configured for housing, by means of a respective seat 10a, 10b, respectively the first rotation support member 8 and the second rotation support member 9. In other words, the spacer 10 can comprise a first seat 10a defined at a first end of the spacer 10 and configured for at least partially housing the first rotation support member 8 and a second seat 10b defined at a second end of the spacer 10 axially opposite the first end and configured for at least partially housing the second rotation support member 9. As illustrated in figure 1, the seats 10a, 10b of the spacer 10 are axially spaced and opposite each other. The seats 10a, 10b can have a substantially annular extension and they can have a respective annular abutment surface. The spacer 10 also comprises a drive element 10c emerging transversely from the tubular shell at the internal area; the drive element 10c is arranged in interposition between the axially opposite ends of the spacer 10. The drive element 10c is configured for centering the spacer 10 with respect to the positioning element 7 and, in addition or as an alternative, for driving the spacer with respect to the positioning element 7. The drive element 10c preferably has an axially symmetric extension that is substantially annular, and it is provided with a cavity sized for allowing the insertion at least of the second end 7b of the positioning element 7.

The process provides for engaging the first rotation support member 8, the second rotation support member 9 and the spacer 10 with the positioning element 7. Such engagement can be carried out by fitting, in temporally different steps, e.g. temporally successive steps, the first rotation support member 8 with the positioning element 7, the spacer 10 with the positioning element 7 and the second rotation support member 9 with the positioning element 7. For example, the process can provide for fitting the first rotation support member 8 with the positioning element 7 in a manner such to place the first abutment surface 8a of the first rotation support member 8 in abutment with the first shoulder 7c. Subsequently, the process can provide for fitting the spacer 10 with the positioning element 7 in a manner such to house the first rotation support member 8 at least partially at the first seat 10a of the spacer 10. In such configuration, the second abutment surface 8b of the first rotation support member 8 is in abutment with the annular abutment surface of the seat 10a. Subsequent to the step of fitting the spacer 10 with the positioning element 7, the process can provide for fitting the second rotation support member 9 with the positioning element 7 in a manner such to place the first abutment surface 9a of the second rotation support member 9 in abutment with the second shoulder 7d and house the second rotation support member 9 at least partially at the second seat 10b of the spacer 10. In such configuration, the second abutment surface 9b of the second rotation support member 9 is in abutment with the annular abutment surface of the seat 10b.

The process provides for suitably positioning the second molding element 5 and the third molding element 6 with respect to the first molding element 4. The suitable positioning of the first molding element 4, of the second molding element 5 and of the third molding element 6 allows assembling the mold 2. The mold 2 in assembled configuration is illustrated for example in figure 1, where the previously-described mutual positioning of the first rotation support member 8, of the spacer 10 and of the second rotation support member 9 is also illustrated. The process provides for inserting the third molding element 6 between the first molding element 4 and the second molding element 5. The positioning between first molding element 4, second molding element 5 and third molding element 6 can provide for relatively moving at least two from among the aforesaid molding elements 4, 5, 6. The relative movement of at least two from among the aforesaid molding elements 4, 5, 6, for example of the first molding element 4 and of the second molding element 5, allows forming at least part of the molding chamber. The relative movement between the aforesaid molding element 4, 5, 6 can provide for approaching the first molding element 4 and the third molding element 6 and for approaching the second molding element 5 and the third molding element 6 to form the molding chamber.

In order to allow a correct and unique mutual positioning between the first molding element 4 and the second molding element 5, the process can provide for the arrangement of an abutment element 11. The abutment element 11 is configured for providing a positioning abutment for the positioning element 7. For such purpose, as illustrated in figure 1, the abutment element 11 has a cavity at least partially counter-shaped with respect to the second end 7b of the positioning element 7. The process can provide for engaging the abutment element 11 at a housing of the second molding element 5 or it can provide for arranging a second molding element 5 with which an abutment element 11 has been pre-engaged. As illustrated in figure 1, the abutment element 11 can then be engaged with the second molding element 5 at the aforesaid housing. Alternatively, the abutment element 11 and the second molding element 5 can be made of a single piece.

The third molding element 6 has a recess; in the assembled configuration of the mold 2, the recess is extended circumferentially around the spacer 10. The recess of the third molding element 6 can coincide with the molding cavity of the third molding element 6 or it can define a part of the molding cavity of the third molding element 6. As will be seen in more detail hereinbelow, the recess is shaped as a collar. In the embodiment which only provides for a first molding element 4 and a second molding element 5, the recess can be defined at the first molding element 4 or at the second molding element 5 or partially at the first molding element 4 and partially at the second molding element 5.

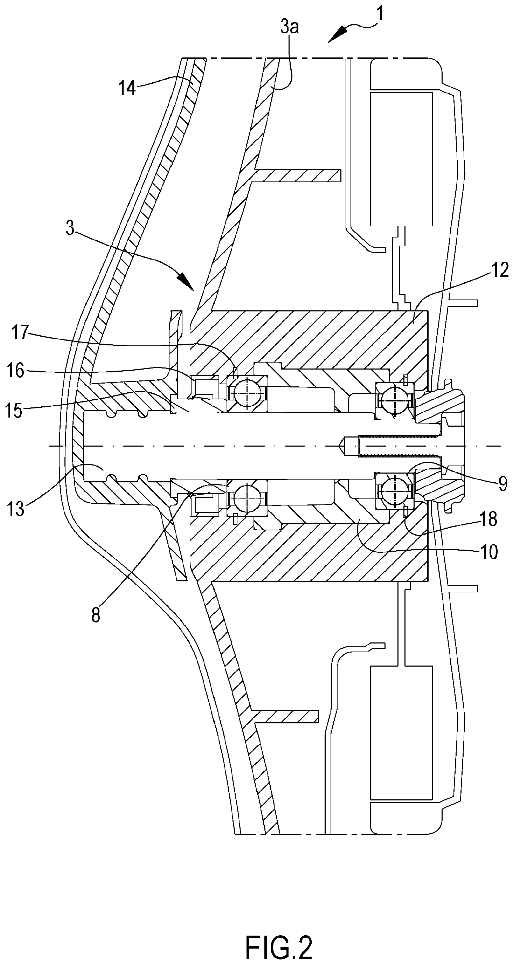

The process in accordance with the present invention provides for co-molding the first rotation support member 8, the spacer 10 and the second rotation support member 9 with plastic material at the molding chamber to form a tub assembly 1. The plastic material can be a composite plastic material, e.g. a plastic material reinforced with glass fiber. The tub assembly 1 thus formed has the first rotation support member 8, the spacer 10 and the second rotation support member 9 embedded in the plastic material forming the tub element 3. In substance, by means of the co-molding it is therefore possible to fit the first rotation support member 8, the spacer 10 and the second rotation support member 9 in the plastic material forming the tub element 3. Advantageously, the co-molding therefore allows making a close and firm engagement between the tub element 3 and the first rotation support member 8, the spacer 10 and the second rotation support member 9. The co-molding is carried out by means of introduction of plastic material within the molding chamber. The introduction of plastic material in the molding chamber is preferably carried out via injection of plastic material in the molding chamber (injection co-molding). The introduction of plastic material within the molding chamber is carried out by conveying plastic material at least partially around the first rotation support member 8, the spacer 10 and the second rotation support member 9 to form a tub element 3 made of plastic material. The introduction of plastic material within the molding chamber preferably provides for introducing material into the molding cavities of the first molding element 4, of the second molding element 5 and of the third molding element 6. The introduction of plastic material into the cavity of the third molding element 6 provides for introducing plastic material at least at the recess of the third molding element 6. By introducing plastic material into the recess of the third molding element 6, it is possible to make a collar 12 of the tub assembly 1. As illustrated in figure 2, the collar 12 of the tub assembly 1 is configured for allowing the through housing of a shaft at its interior and it has an axial extension greater than an axial extension of the spacer 10; in such a manner, the collar 12 is capable of enclosing and incorporating the spacer 10. The collar 12 can constitute a component adapted to structurally support the first rotation support member 8 and the second rotation support member 9. The collar 12 is substantially the tubular portion of the tub element 3 configured for rotatably housing, in a through manner, the rotating drive shaft of the basket. In order to carry out the introduction of the plastic material within the molding chamber, at least one from among the first molding element 4, the second molding element 5 and the third molding element 6 can comprise a feed channel in fluid communication with the molding cavity thereof. In the assembled configuration of the mold 2, such feed channel is in fluid communication with the molding chamber and allows feeding plastic material at the molding chamber. Providing for the spacer 10 allows - in addition to spacing the first rotation support member 8 from the second rotation support member 9 - also preventing the introduction of plastic material into axial interspaces respectively defined between the first rotation support member 8 and the drive element 10c and between the second rotation support member 9 and the drive element 10c (see figure 1). The introduction of plastic material in such axial interspaces is undesired since it would come to block the bearings, preventing the operation thereof for supporting in rotation the shaft of the basket of the household appliance in which the tub assembly 1 is intended to be used.

After having carried out the introduction of the plastic material in the molding chamber, the process provides for solidifying the plastic material. The solidification of the plastic material allows forming a tub assembly 1 in which the first rotation support member 8, the spacer 10 and the second rotation support member 9 are integrated and embedded in the tub element 3.

### Tub assembly

The object of the present invention is a tub assembly 1. As stated above, the tub assembly 1 can be used for any household appliance 100 of the type comprising a tub configured for housing a rolling basket at its interior, such as a washing machine or a washer-dryer. Figure 2 shows a tub assembly 1 with which the shaft 13 is rotatably engaged. The shaft 13 crosses the collar 12 and carries a basket 14; the shaft 13 can thus be defined as a rotary drive shaft of the basket.

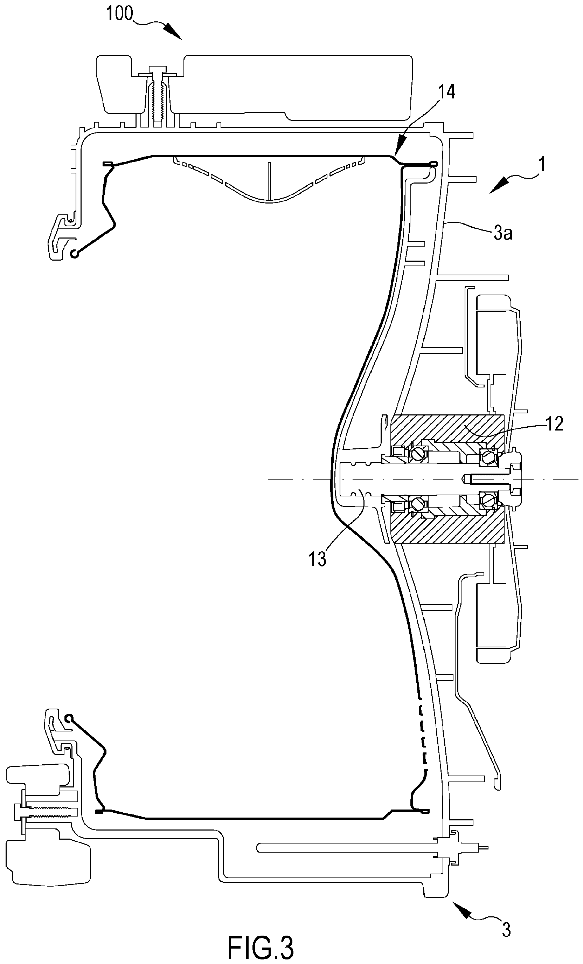

The tub assembly 1 comprises a tub element 3 made of plastic material. As illustrated in figures 2 and 3, the tub element 3 comprises a shell 3a defining a housing volume sized for housing the basket 14 of a household appliance 100.

The tub assembly 1 also comprises at least one rotation support member 8 co-molded in the plastic material forming the tub element 3. The tub assembly 1 preferably comprises a first rotation support member 8, a second rotation support member 9 and a spacer 10 interposed between the first rotation support member 8 and the second rotation support member 9. The first rotation support member 8, the second rotation support member 9 and the spacer 10 can be of the previously-described type. In particular, the first rotation support member 8 and the second rotation support member 9 are configured for supporting the shaft 13 in rotation. With reference to the spacer 10, this has an axial extension and comprises a first seat 10a configured for at least partially housing the first rotation support member 8 and a second seat 10b axially spaced from the first seat 10a and configured for at least partially housing the second rotation support member 9.

The tub assembly 1 also comprises a collar 12 configured for allowing the through housing of the shaft 13 at its interior, in particular of the shaft 13 of the basket 14 of a household appliance 100 in which the tub assembly 1 is intended to be used. The collar 12 can be of the previously-described type and has an axial extension. The spacer 10 is arranged within the collar 12 and is substantially concentric with the collar 12. The first rotation support member 8 and the second rotation support member 9 allow the rotation of the shaft 13 within the collar 12.

The tub assembly 1 can also comprise a third rotation support member 15, which can be of different type with respect to the first and second rotation support member 8, 9. For example, the third rotation support member 15 can be a bearing of sliding type. In the embodiment illustrated in the enclosed figures (see in particular figure 2), the third rotation support member is a bushing 15. As illustrated in figure 2, the bushing 15 is engaged with the shaft 13.

The tub assembly 1 can also comprise a sealing element 16 configured for preventing leakage of fluid (of water) from the tub element 3 to the first rotation support member 8. In the embodiment illustrated in the enclosed figures (see in particular figure 2), the sealing element is in the form of a sealing ring 16. As illustrated in figure 2, the sealing ring 16 is arranged within the collar 12 and is engaged around the bushing 15.

The tub assembly 1 can also comprise at least one positioning ring 17, 18 configured for constraining one from between the first rotation support member 8 and the second rotation support member 9 in a desired position, such as a correct mounting position. In the embodiment illustrated in the enclosed figures (see in particular figure 2), the tub assembly 1 provides for a first positioning ring 17 and a second positioning ring 18. The first positioning ring 17 is configured for constraining the first rotation support member 8 in the correct mounting position and the second positioning ring 18 is configured for constraining the second rotation support member 9 in the correct mounting position. Each positioning ring 17, 18 can be annularly employed with respect to the respective rotation support member 8, 9.

The tub assembly 1 is preferably attained in accordance with the previously-described process.

### Household appliance

The present invention also relates to a household appliance 100. The household appliance 100 can be a washing machine or a washer-dryer. Figure 3 represents a household appliance 100, from which several components have been removed for simplification.

The household appliance 100 comprises a box-like body and a tub assembly 1 of the previously-described type. The tub assembly 1 is arranged in the box-like body and defines, by means of the shell 3a of the tub element 3, a housing volume.

The household appliance 100 also comprises a shaft 13. The shaft 13 is rotatably engaged with the tub assembly 1 by means of the first rotation support member 8 and the second rotation support member 9 of the tub assembly 1. As previously described and as illustrated in figure 3, the shaft 13 is housed in a through manner within the collar 12 of the tub assembly 1.

The household appliance 100 also comprises a basket 14 configured for receiving articles to be treated. The basket 14 is arranged within the housing volume of the tub assembly 1. The basket 14 is guided in rotation by the shaft 13. As illustrated in figure 3, the basket 14 is engaged with the shaft 13 at an axial end of the shaft 13. The household appliance 100 also comprises a motor member configured for driving the basket in rotation. For such purpose, the motor member is operatively connected to the shaft 13, for example at an axial end of the shaft 13 which is opposite the end at which the basket is engaged. The household appliance 100 can comprise a member for transmitting rotary motion operatively connecting the motor member and the shaft 13, such as a belt. As an alternative to providing for a member for transmitting rotary motion, the motor member can be directly connected to the shaft 13 (direct-drive). The motor member can be an electric motor.

### ADVANTAGES OF THE FINDING

The present invention allows obtaining a tub assembly 1 that is compact, stable and having efficient operation. In process terms, the invention allows attaining a tub assembly 1 without providing for the attainment of a bearing holder and without providing for a specific step of engagement between the rotation support members and the bearing holder; indeed, while in the prior art there is a step of attaining the bearing holder and a step of locking the bearings in the bearing holder, the invention allows engaging at least one rotation support member 8, 9 or both the rotation support members 8, 9 directly with the tub element 3, without the aid of a bearing holder. This is possible by co-molding at least one rotation support member 8, 9 or both the rotation support members 8, 9 with plastic material forming the tub element 3.

The invention therefore allows making a tub assembly 1 lacking bearing holder; in such a manner, the process for making a tub assembly 1 according to the invention has limited costs and times and is aimed to substantially eliminate all the tolerance problems of the rotation support members 8, 9 which are among the main causes of resonance and noise. By not requiring a bearing holder, the invention allows eliminating a component and the machining connected therewith; the process and the resulting product (tub assembly) are therefore economically competitive.

A further advantage of the invention is to provide a tub assembly 1 that is light (due to the plastic material used for making the tub element and due to the absence of the bearing holder) and simultaneously strong.

The abovementioned advantages with reference to the tub assembly 1 are shared by the household appliance 100 in accordance with the invention.

## Claims

1. Process for making a tub assembly (1) for a household appliance (100) such as a washing machine or a washer-dryer comprising at least the following steps:
- arranging a mold (2) provided with a molding chamber at least partially shaped as a tub element (3),
- arranging at least one rotation support member (8, 9), such as a rolling bearing, configured for supporting a shaft (13) in rotation, e.g. a drive shaft of a basket (14) of a household appliance (100) such as a washing machine or a washer-dryer,
- positioning the rotation support member in a predefined position with respect to the mold,
- co-molding the rotation support member (8, 9) with plastic material at the molding chamber to form a tub assembly.

2. Process according to claim 1, wherein the step of co-molding the rotation support member (8, 9) with plastic material at the molding chamber comprises:
- introducing plastic material within the molding chamber at least partially around the rotation support member (8, 9) to form a tub element (3) made of plastic material, the tub element (3) comprising a tub portion or a tub for a household appliance (100) such as a washing machine or a washer-dryer and defining a housing volume sized for housing a basket (14) of a household appliance (100) such as a washing machine or a washer-dryer,
- solidifying the plastic material to form a tub assembly (1) wherein the rotation support member (8, 9) is integrated in the tub element (3),
optionally wherein introducing plastic material within the molding chamber at least partially around the rotation support member (8, 9) to form a tub element (3) comprises injecting plastic material in the molding chamber.

3. Process according to claim 1 or 2, wherein the step of co-molding the rotation support member (8, 9) with plastic material at the molding chamber comprises embedding the rotation support member (8, 9) in the plastic material forming the tub element (3).

4. Process according to claim 1 or 2 or 3, wherein the process also comprises the step of arranging a positioning element (7), and wherein positioning the rotation support member (8, 9) in a predefined position with respect to the mold (2) comprises engaging the rotation support member (8, 9) with the positioning element (7), the step of co-molding the rotation support member (8, 9) with plastic material at the molding chamber being subsequent to the step of engaging the rotation support member (8, 9) with the positioning element (7).

5. Process according to any one of the claims 1 to 4, wherein arranging at least one rotation support member (8, 9) comprises arranging a first rotation support member (8) and a second rotation support member (9), both configured for supporting a shaft (13) in rotation, for example a shaft of a basket (14) of a household appliance (100) such as a washing machine or a washer-dryer, the process also comprising the following steps:
- arranging a spacer (10), optionally made of plastic material, configured for spacing the first rotation support member (8) and the second rotation support member (9),
- before the step of co-molding the rotation support member (8, 9) with plastic material at the molding chamber, inserting the spacer (10) between the first rotation support member (8) and the second rotation support member (9).

6. Process according to claim 5, wherein the step of co-molding the rotation support member (8, 9) with plastic material at the molding chamber comprises co-molding the first rotation support member (8), the second rotation support member (9) and the spacer (10) with plastic material at the molding chamber,
optionally wherein co-molding the first rotation support member (8), the second rotation support member (9) and the spacer (10) with plastic material at the molding chamber comprises embedding the first rotation support member (8), the second rotation support member (9) and the spacer (10) in the plastic material forming the tub element (3).

7. Process according to claim 5 or 6 when dependent on claim 4, wherein the positioning element (7) has an elongated shape with axial extension and comprises a first shoulder (7c) and a second shoulder (7d) axially spaced from each other and wherein the step of engaging the rotation support member (8, 9) with the positioning element (7) comprises engaging the first rotation support member (8), the second rotation support member (9) and the spacer (10) with the positioning element (7), engaging the first rotation support member (8), the second rotation support member (9) and the spacer (10) with the positioning element (7) comprising:
∘ fitting the first rotation support member (8) with the positioning element (7), the step of fitting the first rotation support member with the positioning element comprising placing an abutment surface (8a) of the first rotation support member (8) in abutment with the first shoulder (7c),
∘ fitting the spacer (10) with the positioning element (7), the step of fitting the spacer (10) with the positioning element (7) comprising housing the first rotation support member (8) at least partially at a first seat (10a) of the spacer (10),
∘ fitting the second rotation support member (9) with the positioning element (7), the step of fitting the second rotation support member (9) with the positioning element (7) comprising placing an abutment surface (9a) of the second rotation support member in abutment with the second shoulder (7d) and/or housing the second rotation support member (9) at least partially at a second seat (10) of the spacer (10).

8. Process according to any one of the preceding claims, wherein arranging a mold (2) provided with a molding chamber at least partially shaped as a tub element (3) comprises arranging at least a first molding element (4) and a second molding element (5) having respective molding cavities, said molding cavities being configured for forming, in cooperation, at least part of the molding chamber,
and wherein, before the step of co-molding the rotation support member (8, 9) with plastic material at the molding chamber, the process provides for a step of approaching the first molding element (4) and the second molding element (5), the step of approaching the first molding element (4) and the second molding element (5) comprising a step of forming at least part of the molding chamber,
optionally wherein arranging a mold (2) provided with a molding chamber at least partially shaped as a tub element (3) comprises:
- arranging at least a first molding element (4), a second molding element (5) and a third molding element (6) having respective molding cavities, said molding cavities being configured for forming, in cooperation, the molding chamber, the third molding element (6) having a recess,
- arranging the third molding element (6) between the first molding element (4) and the second molding element (5),
and wherein co-molding the rotation support member (8, 9) with plastic material at the molding chamber comprises:
- forming a collar (12) of the tub assembly (1) at said recess, the collar (12) being configured for allowing the through housing of a shaft (13) at its interior, for example of a drive shaft of a basket (14) of a household appliance (100) such as a washing machine or a washer-dryer,
- embedding the rotation support member (8, 9) in the plastic material forming the collar (12).

9. Tub assembly (1) for a household appliance (100) such as a washing machine or a washer-dryer, the tub assembly (1) comprising:
- a tub element (3) made of plastic material defining a housing volume sized for housing a basket (14) of a household appliance (100) such as a washing machine or a washer-dryer,
- at least one rotation support member (8, 9) co-molded in the plastic material forming the tub element (3),
optionally wherein the tub assembly (1) is made by means of the process in accordance with any one of the preceding claims.

10. Household appliance (100), such as a washing machine or a washer-dryer, comprising:
- a box-like body,
- a tub assembly (1) in accordance with claim 9, the tub assembly (1) being arranged in the box-like body, the tub element (3) defining a housing volume,
- a basket (14) arranged at said housing volume and configured for receiving articles to be treated,
- a shaft (13) configured for driving the basket (14) in rotation and rotatably engaged with the tub assembly (1) by means of the rotation support member (8, 9) of the tub assembly (1).
